# FASCICULE DE BREVET EUROPEEN

(11) **EP 1 747 954 B1**
(45) Date de publication et mention de la délivrance du brevet: **19.12.2007**
(21) Numéro de dépôt: 06300832.0
(22) Date de dépôt: 27.07.2006
(51) Int. Cl.: B60R 22/24, A44B 11/25

(54) **Ceinture de sécurité pour siège de véhicule automobile et siège correspondant**
Sicherheitsgurt für ein Kraftfahrzeug und dazugehöriger Sitz
Seat belt for a vehicle and corresponding seat

(30) Priorité: 28.07.2005 FR 0552360
(43) Date de publication de la demande: 31.01.2007
(73) Titulaire: RENAULT S.A.S., 92100 Boulogne Billancourt (FR)
(72) Inventeur: Legrand, Jean-Pierre, 28300, Bercheres Saint Germain (FR)
(74) Mandataire: Davies, Owen Robert Treharne

(56) Documents cités:
- WO-A-83/03767
- DE-A1- 3 219 712
- US-A- 5 222 278
- US-A- 5 957 499

## Description

La présente invention concerne une ceinture de sécurité pour siège de véhicule automobile et un siège comprenant cette ceinture de sécurité.

Les véhicules automobiles sont généralement équipés de sangles de retenue et plus particulièrement de sangles de retenue pour utilisateurs, dénommées "ceintures de sécurité".

Ces ceintures de sécurité comportent un dispositif de verrouillage composé d'un pêne et d'une boucle. La boucle est généralement liée à l'habitacle alors le pêne est souvent monté glissant sur la sangle. Dans ce cas, un pion est généralement présent sur la sangle pour former un arrêt en translation du pêne sur la sangle.

En position d'utilisation, c'est-à-dire lorsqu'un passager doit être retenu, l'enclenchement du pêne dans la boucle assure le verrouillage de la ceinture.

En position de rangement, c'est-à-dire lorsque la ceinture ne retient pas de passagers, le pêne et la boucle sont dissociés. Dans cette position la ceinture est maintenue entre deux points d'attache liés à l'habitacle. Lesdits points d'attache, par des moyens de rappel tels que des enrouleurs, maintiennent la sangle tendue ce qui empêche le débattement de cette sangle. Le pêne, lui, conserve des degrés de liberté par rapport à la sangle. Lorsque l'habitacle est en mouvement, le pêne, peut se balancer autour de la sangle et peut aussi facilement entrer en contact avec des éléments de l'habitacle environnants la ceinture. Les chocs occasionnés provoquent des bruits nuisibles et diminuent le confort des passagers.

Le libre balancement du pêne peut également gêner sa préhension par un utilisateur.

On connaît des dispositifs dont le but est de palier ces inconvénients.

Ainsi le document US 5 957 499 propose une sangle de ceinture munie d'une pochette dans laquelle une extrémité du pêne peut être insérée lorsque la ceinture est en position de rangement. La pochette maintient le pêne plaqué à la sangle qui est immobile dans l'habitacle et empêche ainsi tout mouvement de ce même pêne par rapport aux éléments environnants la sangle.

Ce document présente cependant des inconvénients en terme de confort d'utilisation et de sécurité. En effet, le rangement ou l'utilisation de la ceinture nécessite l'insertion ou le retrait de l'extrémité du pêne dans sa pochette ce qui n'est pas forcement aisé. Or le pêne, pour des raisons évidentes de sécurité et de confort d'utilisation, doit être le plus aisément préhensible quels que soient la position du passager, la localisation de la ceinture dans l'habitacle et les mouvements du véhicule.

D'autres dispositifs proposent des ceintures dont la géométrie particulière du pêne a pour objet la limitation du libre débattement de ce même pêne par rapport à la sangle. Dans ce type de dispositif, l'extrémité du pêne coopérant avec la boucle de verrouillage est proposée saillante. Cette extrémité saillante forme une surface inclinée par rapport au plan de la zone du pêne comportant l'attache de la sangle à ce même pêne et orientée vers la sangle. Cette extrémité saillante du pêne est donc continuellement en contact avec la sangle de la ceinture.

Cependant, ces dispositifs présentent l'inconvénient de nuire au confort d'utilisation lors du verrouillage de la ceinture. En effet, l'inclinaison entre l'extrémité de préhension du pêne et la languette impose à l'utilisateur un mouvement peu aisé pour introduire le pêne dans la boucle de verrouillage.

Pour remédier à ces inconvénients, l'objet de la présente invention est de fournir une ceinture de sécurité améliorée qui empêche la saillie du pêne en permettant un contact constant dudit pêne avec la sangle.

L'invention a également pour objet un dispositif de sangle de retenue facilitant la préhension du pêne en position de rangement.

L'invention a également pour objet un dispositif de sangle de retenue facilitant l'insertion du pêne dans la boucle.

A cette fin, l'invention propose une ceinture de sécurité pour siège de véhicule automobile comportant une sangle formant la ceinture proprement dite, et un pêne comprenant une partie centrale de réception de la sangle à deux fentes parallèles traversées par la sangle, une languette inférieure formant pêne destinée à coopérer avec un moyen de verrouillage formant gâche monté sur le véhicule, et une partie supérieure de préhension du pêne, cette partie et la languette inférieure se trouvant de part et d'autre de la partie centrale de réception de la sangle selon une même direction, caractérisée en ce que la partie supérieure de préhension comprend à son extrémité libre supérieure un bossage qui est orienté selon une direction sensiblement transversale au plan de la sangle et qui est en appui dessus lorsque la ceinture de sécurité est en position de rangement.

Selon une caractéristique de l'invention, la languette inférieure et la partie centrale de réception de la sangle sont réalisées en matériau rigide et la partie supérieure de préhension est réalisée dans un matériau élastique apte à se déformer pour faciliter l'insertion de la languette dans l'organe de verrouillage quelque soit l'angle d'attaque.

L'invention concerne également un siège de véhicule automobile comprenant ladite ceinture de sécurité mentionnée précédemment.

Avantageusement, la sangle est en appui contre le dossier du siège quand la ceinture de sécurité est en position de rangement.

D'autres caractéristiques et avantages de l'invention apparaîtront clairement à la lecture de la description suivante du mode de réalisation non limitatif de celle-ci, en liaison avec les dessins annexés sur lesquels :
- la figure 1 représente une vue en perspective de la ceinture de sécurité selon l'invention,
- la figure 2 représente une vue de côté de la ceinture de sécurité selon l'invention, et
- la figure 3 représente une vue en coupe de l'insertion du pêne dans un organe de verrouillage dans différentes positions.

L'invention proposée s'applique à tout type de ceinture de sécurité composée d'au moins une sangle et au moins un pêne destiné à s'enclencher dans un organe de verrouillage tel qu'une gâche.

Ainsi, la présente invention ne se limite pas aux seuls véhicules automobiles. Elle ne se limite pas non plus à la seule retenue de passagers.

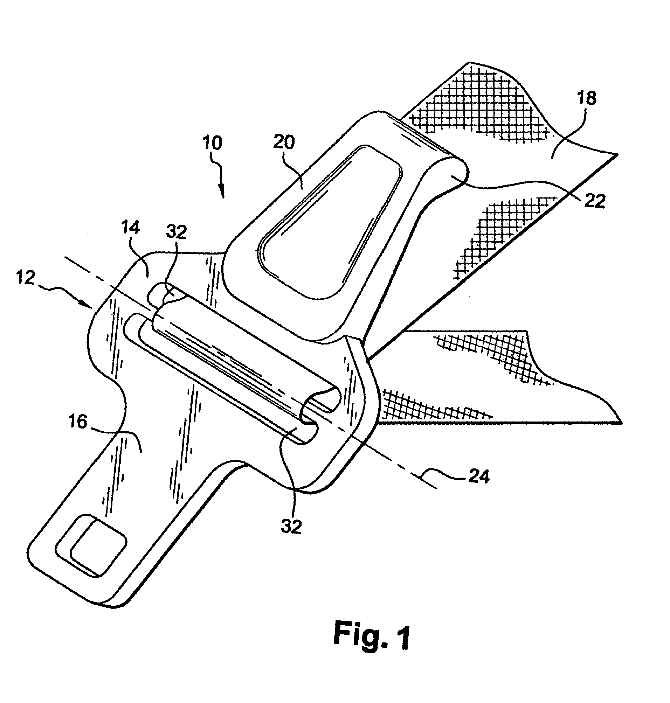

Conformément à la figure 1, la ceinture 10 est composée d'une sangle 18 munie d'un premier élément d'un dispositif de verrouillage tel qu'un pêne, qui coopère dans une position d'utilisation avec un second élément du dispositif de verrouillage formant gâche 34, solidaire de l'habitacle.

Le pêne 12 de la figure 1 est constitué de trois parties ayant chacune une fonction distincte :
- une languette inférieure 16 destinée à s'enclencher dans un moyen de verrouillage 34.
- une partie centrale de réception 14 de la sangle, connue en soit, porte la languette 16. La partie centrale 14 comporte deux fentes parallèles 32 laissant passer la sangle et permettant un coulissement libre du pêne 12 sur la sangle 18. Entre ces deux fentes, le pêne est mobile autour d'un axe 24. Cet axe 24 est perpendiculaire à la direction de coulissement.
- une partie supérieure de préhension 20 portée par la partie centrale 14. Cette partie supérieure 20 prolonge la partie centrale 14 selon la direction du coulissement.

La languette 16 et la partie supérieure 20 se situent de part et d'autre de la partie centrale 14.

La partie 20 présente à son extrémité libre un bossage 22 qui est orienté selon une direction sensiblement transversale au plan de la sangle et qui est en appui dessus lorsque la ceinture de sécurité est en position de rangement. La sangle 18 est en appui vers un élément de l'habitacle tel que par exemple un dossier 28 de siège, situé suffisamment proche pour en permettre le contact.

En position de rangement de la sangle 18, c'est-à-dire lorsque la ceinture ne retient pas de passagers, le pêne 12 et la gâche 34 sont dissociés.

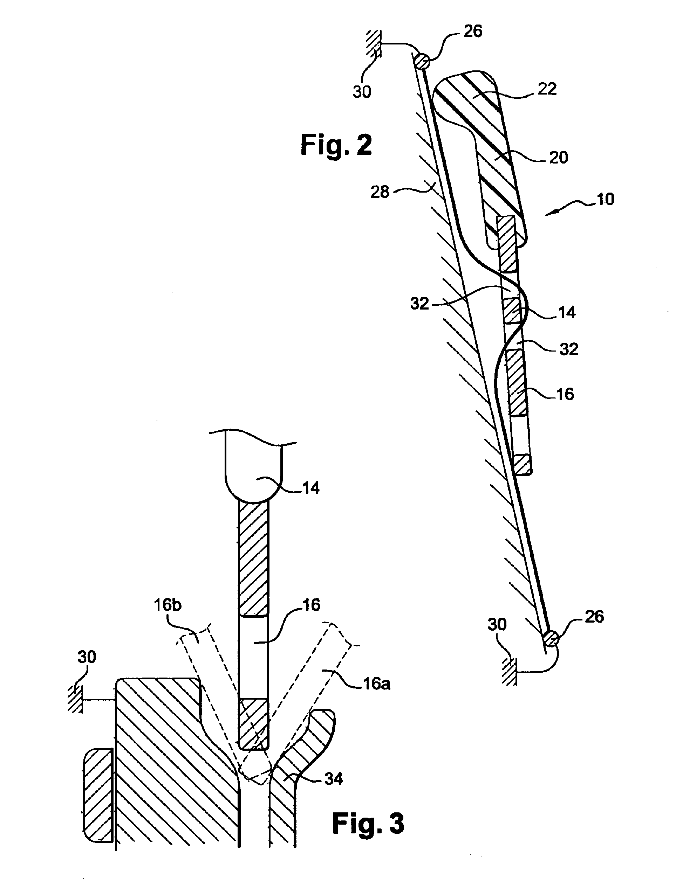

Dans cette position illustrée sur la figure 2, la sangle 18 est maintenue tendue entre deux points d'attache 26 liés à l'habitacle 30 et comportant des moyens de mise en tension de la sangle tels que des enrouleurs (non représentés).

Lorsque l'habitacle est en mouvement, le pêne 12 est entraîné en déplacement selon ses degrés de liberté.

Le bossage 22 et la languette 16, situés de part et d'autre de l'axe de pivotement 24, constituent deux butées qui limitent la rotation du pêne 12 autour de l'axe 24. Le débattement angulaire du pêne 12 autour de son axe 24 est donc maîtrisé et la languette 16 n'entre plus en contact de manière incontrôlée avec des éléments de l'environnement de la ceinture 10.

Les chocs et bruits sont ainsi évités, la languette 16 n'est plus en saillie et, enfin, la position fixe du pêne 12 facilite sa préhension par un utilisateur.

La partie supérieure 20 facilite l'insertion du pêne dans l'organe de verrouillage et le bossage 22 facilite la préhension. La partie 20 est réalisée, par exemple, en un matériau élastique telle que du caoutchouc pour permettre une flexion entre l'extrémité libre de préhension 20 et la partie centrale 14.

Comme représenté à la figure 3, l'insertion de la languette 16 dans la gâche 34 peut être effectuée même si la direction du mouvement qu'opère l'utilisateur ne correspond pas exactement avec la direction théorique d'insertion de la languette 16. Une fois l'extrémité de la languette 16 engagée à l'entrée de la gâche 34, la partie supérieure de préhension 20 flexible se déforme pour corriger les éventuelles erreurs de trajectoire de l'utilisateur et permettre l'insertion du pêne 12 guidé dans ladite gâche 34. La figure 3 propose trois angles différents 16, 16a et 16b de présentation de l'extrémité de la languette 16 dans la gâche 34 et met ainsi en évidence le gain en confort d'utilisation que procure cette caractéristique de l'invention.

L'invention permet donc de réaliser une ceinture de sécurité augmentant le confort général des utilisateurs en limitant les chocs du pêne 12 dans l'habitacle en position de rangement, en favorisant la préhension du pêne 12 et en facilitant l'insertion de la languette 16 dans la gâche 34 pour un faible coût.

## Revendications

1. Ceinture de sécurité (10) pour siège de véhicule automobile comportant :
- une sangle (18) formant la ceinture proprement dite, et
- un pêne (12) comprenant :
o une partie centrale de réception (14) de la sangle à deux fentes parallèles (32) traversées par la sangle,
o une languette inférieure (16) formant pêne destinée à coopérer avec un moyen de verrouillage (34) formant gâche monté sur le véhicule, et
o une partie supérieure de préhension (20) du pêne (12), cette partie (20) et la languette inférieure (16) se trouvant de part et d'autre de la partie centrale de réception (14) de la sangle (18) selon une même direction,
**caractérisée en ce que** la partie supérieure de préhension (20) comprend à son extrémité libre supérieure un bossage (22) qui est orienté selon une direction sensiblement transversale au plan de la sangle (18) et qui est en appui dessus lorsque la ceinture de sécurité (10) est en position de rangement.

2. Ceinture de sécurité selon l'une des revendications précédentes, **caractérisée en ce que** la languette inférieure (16) et la partie centrale de réception de la sangle (14) sont réalisées en matériau rigide et **en ce que** la partie supérieure de préhension (20) est réalisée dans un matériau élastique apte à se déformer pour faciliter l'insertion de la languette (16) dans l'organe de verrouillage (34) quelque soit l'angle d'attaque.

3. Siège de véhicule automobile, **caractérisé en ce qu**'il est équipé de la ceinture de sécurité selon les revendications 1 et 2.

4. Siège selon la revendication 5, **caractérisé en ce que** la sangle (18) est en appui contre le dossier du siège (28) quand la ceinture de sécurité (10) est en position de rangement.

## Claims

1. Seatbelt (10) for a motor vehicle seat, comprising:
- a strap (18) forming the belt properly so-called, and
- a latch plate (12) comprising:
• a central strap-receiving part (14) having two parallel slots (32) through which the strap passes,
• a lower tongue (16) forming the latch bolt and designed to engage with a locking means (34) forming a strike mounted on the vehicle, and
• an upper grip part (20) of the latch plate (12), this part (20) and the lower tongue (16) being coplanar on opposite sides of the central strap (18)-receiving part (14),
which belt is **characterized in that** the upper grip part (20) comprises at its upper free end a projection (22) which is oriented roughly at right angles to the plane of the strap (18) and rests against it when the seatbelt (10) is in the non-use position.

2. Seatbelt according to Claim 1, **characterized in that** the lower tongue (16) and the central strap-receiving part (14) are made of a rigid material and **in that** the upper grip part (20) is made of an elastic material capable of deforming to facilitate the insertion of the tongue (16) into the locking member (34) at any angle of attack.

3. Motor vehicle seat **characterized in that** it is equipped with the seatbelt according to Claims 1 and 2.

4. Seat according to Claim 3, **characterized in that** the strap (18) rests against the seat backrest (28) when the seatbelt (10) is in the non-use position.

## Patentansprüche

1. Sicherheitsgurt (10) für einen Kraftfahrzeugsitz, der aufweist:
- ein Gurtband (18), das den eigentlichen Gurt bildet, und
- einen Riegel (12), der aufweist:
° einen zentralen Bereich (14) zur Aufnahme des Gurtbands mit zwei parallelen Schlitzen (32), die vom Gurtband durchquert werden,
° eine einen Riegel bildende untere Zunge (16), die dazu bestimmt ist, mit einem Verriegelungselement (34) zusammenzuwirken, das ein Schließblech bildet, das am Fahrzeug befestigt ist, und
° einen oberen Greifbereich (20) des Riegels (12), wobei dieser Bereich (20) und die untere Zunge (16) sich zu beiden Seiten des zentralen Bereichs (14) zur Aufnahme des Gurtbands (18) in der gleichen Richtung befinden,
**dadurch gekennzeichnet, dass** der obere Greifbereich (20) an seinem freien Ende eine Wölbung (22) aufweist, die in einer Richtung im Wesentlichen quer zur Ebene des Gurtbands (18) ausgerichtet ist und die darauf aufliegt, wenn der Sicherheitsgurt (10) in der verstauten Stellung ist.

2. Sicherheitsgurt nach Anspruch 1, **dadurch gekennzeichnet, dass** die untere Zunge (16) und der zentrale Bereich (14) zur Aufnahme des Gurtbands aus steifem Werkstoff hergestellt sind, und dass der obere Greifbereich (20) aus einem elastischen Werkstoff hergestellt ist, der sich verformen kann, um das Einfügen der Zunge (16) in das Verriegelungsorgan (34) unabhängig vom Eintrittswinkel zu erleichtern.

3. Kraftfahrzeugsitz, **dadurch gekennzeichnet, dass** er mit dem Sicherheitsgurt nach dem Ansprüchen 1 und 2 ausgestattet ist.

4. Sitz nach Anspruch 3, **dadurch gekennzeichnet, dass** das Gurtband (18) gegen die Rückenlehne des Sitzes (28) anliegt, wenn der Sicherheitsgurt (10) in der verstauten Stellung ist.
